# EUROPÄISCHE PATENTSCHRIFT

(11) **EP 2 719 567 B1**
(45) Veröffentlichungstag und Bekanntmachung des Hinweises auf die Patenterteilung: **14.01.2015**
(21) Anmeldenummer: 13176156.1
(22) Anmeldetag: 11.07.2013
(51) Int. Cl.: B60K 15/035, B60K 15/04, F01N 3/20, B60K 15/03

(54) **Befüllkopf für einen Flüssigkeitstank**
Filling head for a liquid tank
Tête de remplissage pour un réservoir de liquide

(30) Priorität: 09.10.2012 DE 102012109567
(43) Veröffentlichungstag der Anmeldung: 16.04.2014
(73) Patentinhaber: VERITAS AG, 63571 Gelnhausen (DE)
(72) Erfinder: Netzer, Heribert, 63457 Hanau (DE); Niessner, Heiko, 63619 Bad Orb (DE)
(74) Vertreter: Klinski, Robert

(56) Entgegenhaltungen:
- EP-A2- 0 357 874
- DE-U1-202005 011 575
- US-A- 4 195 673
- US-A1- 2007 210 607
- US-A1- 2009 188 923
- US-A1- 2010 200 115

## Beschreibung

Die vorliegende Erfindung betrifft einen Befüllkopf für einen Flüssigkeitstank in einem Kraftfahrzeug.

Die Druckschrift DE 10 2011 009 745 B4 beschreibt einen Einfüllstutzen für einen Nebenflüssigkeitsbehälter für ein Kraftfahrzeug mit einem einstückigen Stutzengehäuse, das einen Mundlochstutzen für ein Zapfventil und einen Einfüllkanal in den Behälter definiert, bei dem innerhalb des Stutzengehäuses eine Aufnahmestruktur für ein Zapfventil vorgesehen ist. Eine einstückige Einlauftülle bildet sowohl einen trichterförmig ausgebildeten Einlaufkanal für die einzufüllende Flüssigkeit als auch einen Teil eines Einfüllstutzen.

Die gattungsbildende Druckschrift US 2010/200115 A1 betrifft eine Führung und eine Fülleinrichtung für einen Tank für eine wässrige Harnstofflösung für einen Dieselmotor.

Die Druckschrift US 2007/210607 A1 betrifft eine Füllrohranordnung für Kraftfahrzeuge, die eine hohe Dichtqualität und Lebensdauer bereitstellt.

Die Druckschrift US 4,195,673 A betrifft Füllrohrventile für Brennstofftanks, die magnetisch betätigt werden.

Die Druckschrift EP 0 357 874 A2 betrifft eine Zapfpistolendichtung zur Verwendung in dem mit einer Mündung reduzierten Durchmessers versehenen Einfüllstutzen eines Kraftstoffbehälters.

Die Druckschrift DE 20 2005 011 575 A1 betrifft einen Einfüllstutzen für einen Behälter aus Kunststoff zum Verhindern einer Fehlbefüllung des Behälters, mit einem flüssigkeitsdicht aufgenommenen Permanentmagneten.

Die Druckschrift US 2009/188 923 A1 betrifft Tanks zum Speichern einer wässrigen Harnstofflösung, die in Verbindung mit einem SCR-System verwendet werden, um die Stickoxidemissionen eines Kraftfahrzeugs zu reduzieren.

Durch die einstückige Ausgestaltung der Einlauftülle mit dem Stutzengehäuse ist diese nur für einen bestimmten Einfüllstutzen einer vorgegebenen Geometrie verwendbar. Für einen Einfüllstutzen anderer Geometrie ist es daher erforderlich, mit großem Aufwand anderes, kompliziertes Spritzgusswerkzeug herzustellen.

Es ist die der Erfindung zugrundeliegende Aufgabe, einen Befüllkopf mit verbessertem und modularem Tauchrohr anzugeben.

Diese Aufgabe wird durch einen Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Befüllkopf für einen Flüssigkeitstank in einem Kraftfahrzeug mit einem zusammengesetzten Tauchrohrformkörper im Inneren des Befüllkopfes gelöst, mit einem ersten Formkörperteil zum Bilden eines Einfüllstutzens für eine Befülldüse und einem zweiten Formkörperteil zum Formen eines Flüssigkeitsstrahls der Befülldüse, das an dem ersten Formkörperteil befestigt ist, wobei das erste Formteil und das zweite Formteil mit einer Gehäusewand des Befüllkopfes ein Flüssigkeitsreservoir zum Aufnehmen einer Flüssigkeitsmenge bilden und das erste Formkörperteil eine Öffnung zum Auslassen von Luft aus dem Flüssigkeitsreservoir umfasst und die Öffnung in der Nähe einer Verbindung des ersten Formkörperteils mit dem Befüllkopf gebildet ist. Der Befüllkopf ist beispielsweise ein Befüllkopf für einen Flüssigkeitstank für eine wässrige Harnstofflösung (SCR-Tank). Der Tauchrohrformkörper kann in den Befüllkopf eingesetzt sein.

Dadurch wird beispielsweise der technische Vorteil erreicht, dass ein modularer Aufbau des Befüllkopfes realisiert wird, so dass unterschiedlich gestaltete Befüllköpfe durch eine Kombination unterschiedlicher Teile gebildet werden können. Daneben wird der Vorteil erreicht, dass ein Flüssigkeitsstrahl unterschiedlicher Zapfpistolen vereinheitlicht wird und eine Füllgeschwindigkeit erzielt werden kann. Dadurch wird zudem der technische Vorteil erreicht, dass der Befüllkopf eine aus der Befülldüse beim Nachtanken ausfließende Menge aufnehmen kann und das erste Formkörperteil eine Öffnung zum Auslassen von Luft aus dem Flüssigkeitsreservoir umfasst. Die Bildung eines Luftpolsters wird verhindert, das ein Einfließen von Flüssigkeit in das Flüssigkeitsreservoir erschwert. Die Öffnung befindet sich an einer Stelle, an der keine Flüssigkeit durch die Öffnung austreten kann.

In einer weiteren vorteilhaften Ausführungsform umfasst das zweite Formkörperteil eine umlaufende kreisförmige Schwallwand zum Vermindern einer Flüssigkeitsströmung in das Flüssigkeitsreservoir. Dadurch wird beispielsweise der technische Vorteil erreicht, dass sich das Flüssigkeitsreservoir langsam mit Flüssigkeit füllt und ein Austreten von Flüssigkeit verhindert wird.

In einer weiteren vorteilhaften Ausführungsform umfasst die umlaufende Schwallwand eine Durchtrittsöffnung für die Flüssigkeitsströmung in das Flüssigkeitsreservoir. Dadurch wird beispielsweise der technische Vorteil erreicht, dass eine Flüssigkeitsströmung über die Größe der Öffnung beeinflusst werden kann.

In einer weiteren vorteilhaften Ausführungsform weist der Tauchrohrformkörper eine zylindrische Grundform auf. Dadurch wird beispielsweise der technische Vorteil erreicht, dass der Tauchrohrformkörper mit geringem Materialaufwand und in kompakter Weise gebildet werden kann.

In einer weiteren vorteilhaften Ausführungsform ist zwischen dem ersten Formkörperteil und dem zweiten Formkörperteil ein Dichtungselement zum Abdichten des Einfüllstutzens eingesetzt. Dadurch wird beispielsweise der technische Vorteil erreicht, dass ein Austreten von Flüssigkeit aus dem Befüllkopf verhindert wird.

In einer weiteren vorteilhaften Ausführungsform läuft das Dichtungselement diagonal um eine Längsachse des Einfüllstutzens herum. Dadurch wird beispielsweise der technische Vorteil erreicht, dass sich die Dichtwirkung des Befüllkopfes durch eine tiefer liegende Dichtung verbessert und Zapfpistolen mit seitlicher Öffnung geschaltet werden können.

In einer weiteren vorteilhaften Ausführungsform umfasst das erste Formkörperteil oder das zweite Formkörperteil eine Auflagefläche für das Dichtungselement. Dadurch wird beispielsweise ebenfalls der technische Vorteil erreicht, dass die Dichtigkeit des Formkörpers verbessert wird.

In einer weiteren vorteilhaften Ausführungsform umfasst das erste Formkörperteil ein Rastmittel zum Einrasten in dem zweiten Formkörperteil oder das zweite Formkörperteil ein Rastmittel zum Einrasten in dem ersten Formkörperteil. Dadurch wird beispielsweise der technische Vorteil erreicht, dass sich der Tauchrohrformkörper auf einfache Weise zusammensetzen lässt.

In einer weiteren vorteilhaften Ausführungsform umfasst das zweite Formkörperteil einen Anschlagsabschnitt zum Bilden eines Anschlags für die Befülldüse. Dadurch wird beispielsweise der technische Vorteil erreicht, dass ein zu weites Eindringen der Befülldüse in den Befüllkopf verhindert wird und die Position des Magneten zum Schalten gesichert ist.

In einer weiteren vorteilhaften Ausführungsform ist der Tauchrohrformkörper mit dem Befüllkopf verschweißt oder verklebt. Dadurch wird beispielsweise der technische Vorteil erreicht, dass sich eine feste Verbindung zwischen dem Befüllkopf und dem Tauchrohrformkörper ergibt.

In einer weiteren vorteilhaften Ausführungsform umfasst das erste Formkörperteil eine umlaufende Wandung zum seitlichen Umschließen des zweiten Formkörperteils. Dadurch wird beispielsweise der technische Vorteil erreicht, dass beide Formkörperteile formschlüssig ineinandergreifen und eine mechanische Verbindung der beiden Teile verbessert wird.

In einer weiteren vorteilhaften Ausführungsform ist das erste Formkörperteil oder das zweite Formkörperteil ein Kunststoffspritzgussteil. Dadurch wird beispielsweise der technische Vorteil erreicht, dass sich die Formkörperteil auf einfache Weise herstellen lassen.

Ausführungsbeispiele der Erfindung sind in den Zeichnungen dargestellt und werden im Folgenden näher beschrieben.

Es zeigen:
- Fig. 1: eine perspektivische Ansicht eines Befüllkopfes;
- Fig. 2: eine Explosionsdarstellung des Befüllkopfes;
- Fig. 3: eine Querschnittsansicht des Befüllkopfes;
- Fig. 4: eine perspektivische Ansicht eines Tauchrohrformkörpers:
- Fig. 5: eine Querschnittsansicht des Tauchrohrformkörpers mit getrennten Formkörperteilen;
- Fig. 6: eine Querschnittsansicht des Tauchrohrformkörpers mit zusammengesetzten Formkörperteilen;
- Fig. 7: eine weitere Querschnittsansicht des Tauchrohrformkörpers mit zusammengesetzten Formkörperteilen; und
- Fig. 8: mehrere Ansichten eines Dichtungselementes.

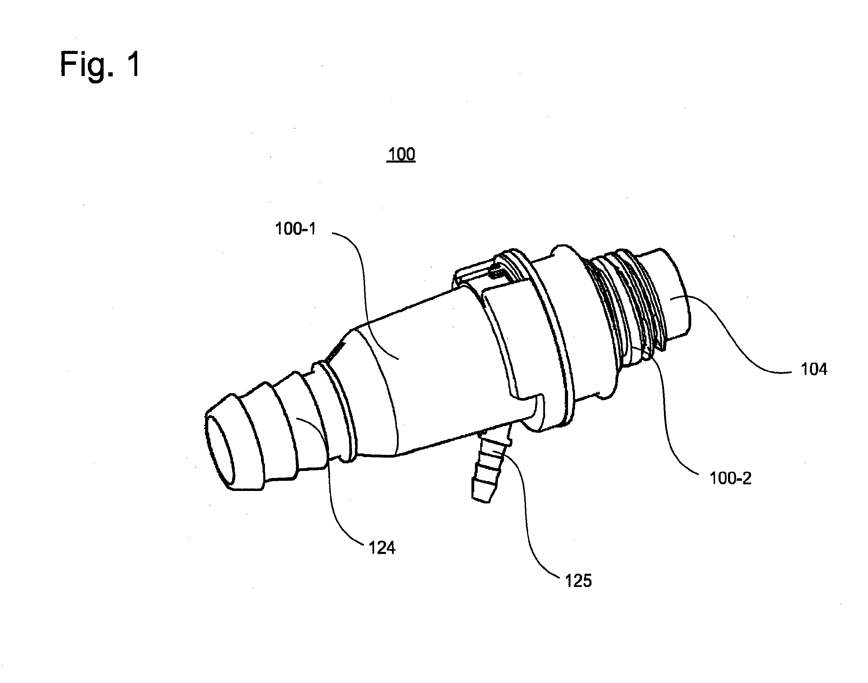

Fig. 1 zeigt eine perspektivische Ansicht eines Befüllkopfes 100, beispielsweise zur Betankung eines Flüssigkeitstanks mit einer wässrigen Harnstofflösung (SCR-Betankung). Eine wässrige Harnstofflösung wird in Kraftfahrzeugen zur Nachbehandlung von Abgasen in einem SCR-Katalysator benutzt wird. Dabei wird durch selektive katalytische Reduktion (Selective Catalytic Reduction - SCR) der Ausstoß von Stickoxiden um etwa 90 % reduziert.

Bei der SCR-Betankung wird die wässrige Harnstofflösung mit unterschiedlich ausgebildeten Zapfpistolen mit einer Füllgeschwindigkeit von bis zu 401/min in den Flüssigkeitstank gefüllt. Dabei sollte verhindert werden, dass die wässrige Harnstofflösung aus dem Befüllkopf 100 austritt und sogenannter Spit-Back entsteht. Daneben sollte auch bei mehrmaligem Nachtanken mit einer Zapfpistole als Befülldüse ein Flüssigkeitsaustritt vermieden werden. Zusätzlich sollte die SCR-Betankung mit einer auf den Befüllkopf aufgeschraubten Kruse-Flasche oder einem Adapter für einen Kanister möglich sein.

Der Befüllkopf 100 ist aus einem ersten Befüllkopfteil 100-1 und einem zweiten Befüllkopfteil 100-2 gebildet. Das erste Befüllkopfteil 100-1 und das zweite Befüllkopfteil 100-2 sind flüssigkeits- und druckdicht miteinander verbunden und bilden im Inneren einen Hohlraum, in dem ein Tauchrohrformkörper eingesetzt ist. Der Tauchrohrformkörper bildet im Inneren des Befüllkopfes 100 einen weiteren Teil eines Einfüllstutzens 104. Der Tauchrohrformkörper nimmt eine Zapfpistole als Befülldüse auf und positioniert diese in dem Befüllkopf 100. Zusätzlich begrenzt der Tauchrohrformkörper den Strahl der aus der Befülldüse austretenden Flüssigkeit.

Daneben umfasst der Befüllkopf 100 einen großen Anschlussstutzen 124 zum Anschließen oder Aufstecken eines Einfüllrohres oder Schlauches, der in einen Flüssigkeitstank führt und einen kleinen Anschlussstutzen 125 zum Anschließen einer Belüftungsleitung, die zum Luftaustausch oder Belüftung bei einer Flaschenbetankung dient, falls eine Flasche (Kruse-Flasche) druckdicht auf einem Gewinde des Befüllkopfes 100 verschraubt wird. Fig. 1 zeigt den Befüllkopf 100 von außen ohne Halteblech und ohne die an den Anschlussstutzen 124 und 125 aufgesteckten Schläuche. Der Befüllkopf 100 kann zur Befestigung an einer Karosserie zusätzlich mit einem Halteblech ausgerüstet sein.

Die Befüllkopfteile 100-1 und 100-2 können beispielsweise aus thermoplastischen Elastomeren (TPE) oder Elastomerlegierungen, insbesondere aus thermoplastischen Polyolefinen wie TPE-O (unvernetzte thermoplastische Polymere), oder Blockcopolymeren wie beispielsweise Polyestern (TPE-E), Polyamidelastomeren (TPE-A) gebildet sein. Besonders vorteilhaft ist die Herstellung aus Polyoxymethylen (POM) oder Polyamiden und deren Derivate, da sich hierdurch eine besondere Widerstandsfähigkeit des Befüllkopfes realisieren lässt. Vorteilhaft ist es, die Einzelteile des Befüllkopfes 100 auf technisch einfache Weise im Spritzgussverfahren herzustellen. Alle Teile des Befüllkopfes 100 können ein Material umfassen, das eine Kristallbildung von Harnstoffkristallen an deren Oberfläche verhindert.

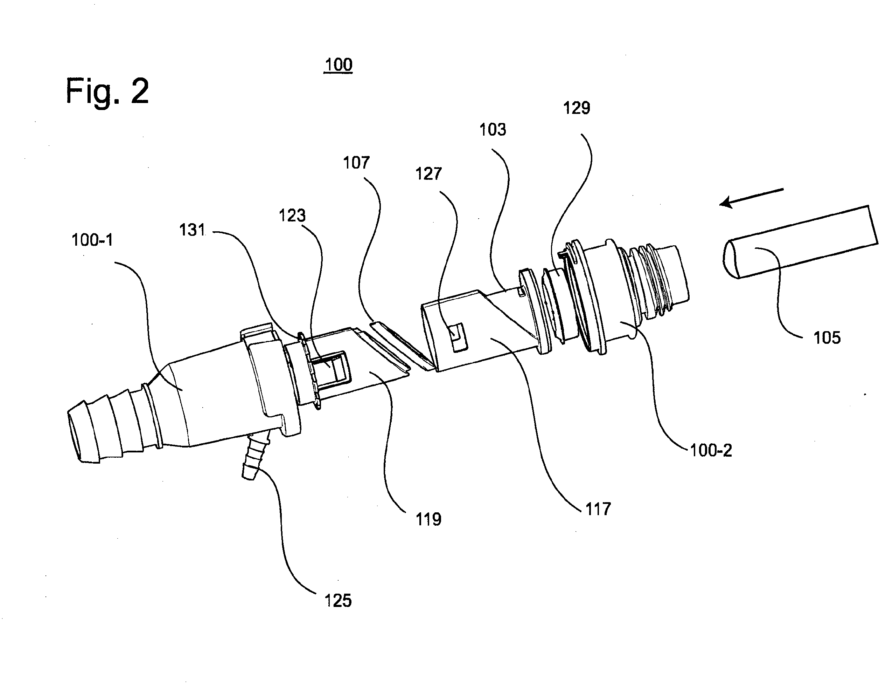

Fig. 2 zeigt eine Explosionsdarstellung des Befüllkopfes 100 und seiner Einzelteile. Der Befüllkopf 100 umfasst einen Tauchrohrformkörper 103 mit einem ersten Formteil 117 und einem zweiten Formteil 119. Zwischen dem ersten Formteil 117 und dem zweiten Formteil 119 ist ein Dichtungselement 107 angeordnet, das die Verbindungsstelle zwischen dem ersten Formteil 117 und dem zweiten Formteil 119 abdichtet. Das erste Formteil 117, das zweite Formteil 119 und das Dichtungselement 107 bilden den Tauchrohrformkörper 103.

Das erste Formteil 117 bildet einen Teil eines Einfüllstutzens 104 im Inneren des Befüllkopfes 100. Das zweite Formteil 119 bildet einen über die eingesetzte Befülldüse 105 hinausragenden Teil zum Formen und Zentrieren eines von der Befülldüse 105 beim Betanken ausgehenden Flüssigkeitsstrahles.

Durch das Formen des Flüssigkeitsstrahles mittels des zweiten Formteils 117 wird eine Betankung mit einer hohen Durchflussgeschwindigkeit sichergestellt und ein Ansammeln der Flüssigkeit im Inneren des Befüllkopfes 100 verhindert. Besonders vorteilhaft ist es, wenn das zweite Formteil 119 zylinder- oder rohrförmig mit parallelen Wänden ist, da hierdurch eine laminare Flüssigkeitsströmung erzeugt werden kann.

Das erste Formteil 117 dient daneben zum Fixieren eines Ringmagneten 129 im Inneren des Befüllkopfes 100. Der Ringmagnet 129 ist zwischen dem ersten Formteil 117 und dem ersten Befüllkopfteil 100-1 in einem Hohlraum eingesetzt. Der Ringmagnet 129 erzeugt ein dauerhaftes magnetisches Feld, das von einer Befülldüse 105 erfasst werden kann, um die korrekte Position der Befülldüse 105 im Inneren des Befüllkopfes 100 zu bestimmen. Zusätzlich sichern Anschlagrippen die korrekte Position. Weiter umfasst das erste Formteil 117 zwei seitliche Rastöffnungen 127 zum Eingreifen eines Rasthakens 123.

Das zweite Formteil 119 umfasst zwei Rasthaken 123 zum Eingreifen in die Rastöffnungen 127 des ersten Formteils 117. Beim Zusammenstecken des ersten Formteils 117 und des zweiten Formteils 119 rasten die Rasthaken 123 in der Rastöffnung 127 ein und es entsteht eine feste Verbindung, die auf einfache Weise hergestellt werden kann. Im Allgemeinen können jedoch auch andere Rastmittel vorgesehen sein, solange durch die eine mechanische Verbindung des ersten Formteils 117 und des zweiten Formteils 119 bewirkt wird.

An dem unteren Ende des zweiten Formteils 119 ist eine beispielsweise kreisförmige Schwallwand 131 angeordnet, die die Flüssigkeitsströmung in ein Flüssigkeitsreservoir zwischen dem Tauchrohrformkörper 103 und einer Gehäusewand des Befüllkopfes 100 hemmt. Die zurückströmende Flüssigkeit wird durch die Schwallwand 131 abgebremst und es wird verhindert, dass der Befüllkopf 100 vollständig beflutet wird. Nichtsdestotrotz sollte beim Nachtanken das Flüssigkeitsreservoir mit einer ausreichenden Flüssigkeitsrestmenge befüllt werden können.

Das Dichtungselement 107 ragt in die Innenseite des Tauchrohrformkörpers 103 hinein und dichtet die Befülldüse 105 gegenüber dem Tauchrohrformkörper 105 ab, indem sich das Dichtungselement 107 seitlich umlaufend um die Befülldüse 105 legt. Dadurch wird verhindert, dass Flüssigkeit zwischen der Befülldüse 105 und dem Tauchrohrformkörper 103 zurückspritzen kann. Das Dichtungselement 107 läuft in der Längsachse des Befüllkopfes 100 diagonal um die Befülldüse 105 um. Durch diese Anordnung lässt sich der technische Vorteil erreichen, dass die Dichtwirkung des Befüllkopfes 100 erhöht wird, die Befülldüse 105 möglichst weit im Inneren des Befüllkopfes 100 abgedichtet wird und eine Öffnung für eine Zapfventilautomatik am unteren Ende der Befülldüse 105 unverdeckt bleibt. Die Zapfventilautomatik sorgt dafür, dass der Tankvorgang bei vollem Flüssigkeitstank automatisch beendet wird.

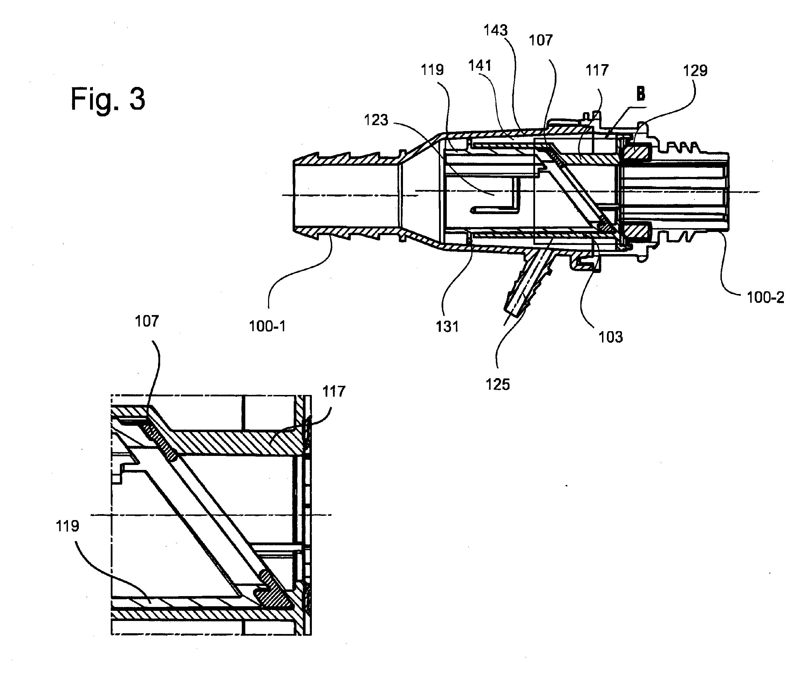

Fig. 3 zeigt eine Querschnittsansicht des Befüllkopfes 100. Der Befüllkopf 100 umfasst zwischen der Gehäusewand 143 und dem Tauchrohrformkörper 103 das Flüssigkeitsreservoir 141. Das Flüssigkeitsreservoir 141 bildet einen zylinderförmigen Hohlraum, in dem eine aus dem Tank zurückschwappende Flüssigkeitsmenge oder eine beim Nachtanken aus der Befülldüse 105 ausströmende Flüssigkeitsmenge aufgenommen werden kann. Dadurch wird ein Austreten der Flüssigkeit aus dem Befüllkopf 100 vermieden.

Die Schwallwand 131 ist am unteren Ende des Tauchrohrformkörpers 103 am Eingang des Flüssigkeitsreservoirs 141 angeordnet. Flüssigkeit, die in oder aus dem Flüssigkeitsreservoir 141 fließt, passiert die Schwallwand 131. Dadurch kann ein Fluss in das Flüssigkeitsreservoir 141 gehemmt werden, so dass ein Austritt von Flüssigkeit aus dem Befüllkopf 100 verhindert wird. In der Schwallwand 131 sind zu diesem Zweck Durchtrittsöffnungen 145 gebildet, die den Fluss in das Flüssigkeitsreservoir 141 bestimmen. Die Größe, Anzahl und Lage der Durchtrittsöffnungen 145 ist auf die Größe dieses Flusses abgestimmt.

Vorteilhaft ist es, wenn das Flüssigkeitsreservoir 141 mindestens ein Volumen von 160 ml bis 200 ml aufweist, da in diesem Fall auch bei einem dreimaligen Nachtanken mit einer Zapfventilautomatik ein Austreten von Flüssigkeit aus dem Befüllkopf 100 vermieden werden kann.

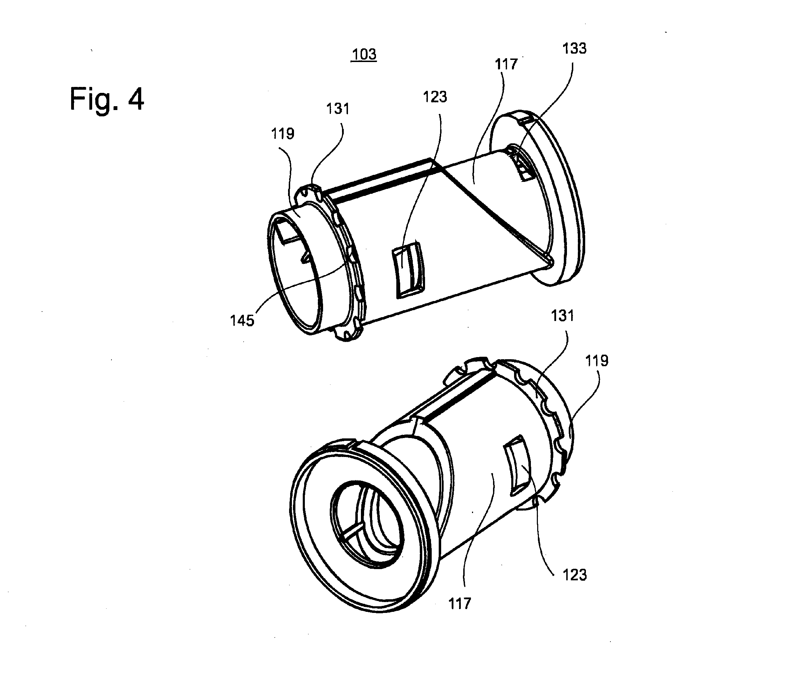

Fig. 4 zeigt eine perspektivische Ansicht eines Tauchrohrformkörpers 103. Am oberen Ende des ersten Formteils 117 befindet sich eine Öffnung 133 aus der Luft aus dem Flüssigkeitsreservoir 141 austreten kann, so dass die Bildung eines Luftpolsters im Flüssigkeitsreservoir 141 verhindert wird. Ein Druckpolster könnte verhindern, dass das Flüssigkeitsreservoir 141 beflutet werden kann, beispielsweise bei einem Nachtankvorgang, so dass Flüssigkeit aus dem Befüllkopf 100 austreten könnte. Die Größe und die Lage der Öffnung 133 sind auf die Funktion des Befüllkopfes 100 und das Flüssigkeitsreservoir 141 abgestimmt.

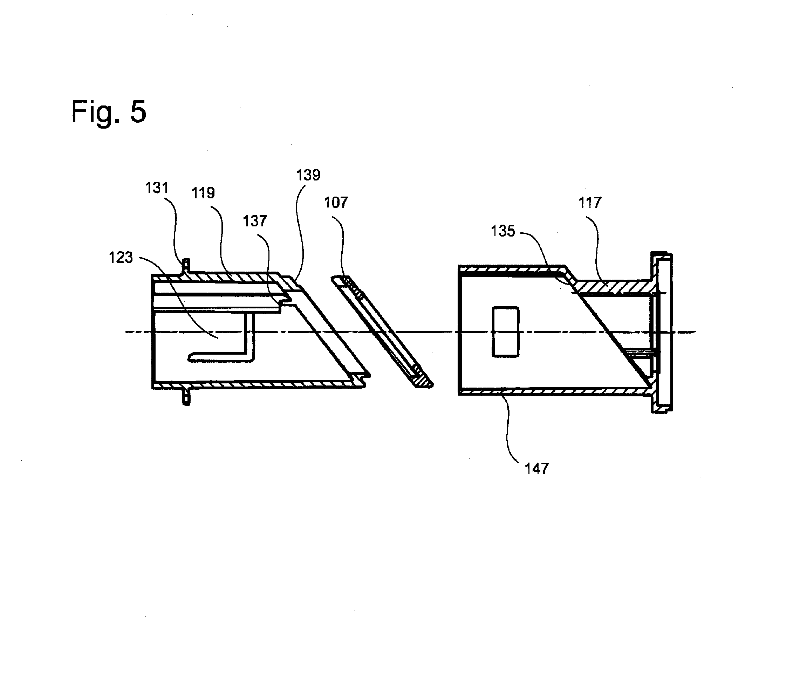

Fig. 5 zeigt eine Querschnittsansicht des Tauchrohrformkörpers 103 mit getrennten Formkörperteilen 117 und 119. Das erste Formteil 117 weist eine diagonal um die Längsachse des Befüllkopfes umlaufende Auflagefläche 135 für das Dichtungselement 107 auf. An der Auflagefläche 135 liegt das Dichtungselement 107 an. In entsprechender Weise umfasst das zweite Formteil 119 eine weitere Auflagefläche 139, an der eine entgegengesetzte Seite der Dichtungselements 107 anliegt. Das Dichtungselement 107 wird beim Zusammensetzen des Tauchrohrformkörpers 103 zwischen den Auflageflächen 135 und 139 eingeklemmt und von diesen gehalten. Dadurch wird der Vorteil erreicht, dass sich die Dichtwirkung des Dichtungselementes 107 innerhalb des Tauchrohrformkörpers 103 verbessert.

Daneben umfasst der Tauchrohrformkörper 103 einen Anschlagsabschnitt 137 zum Bilden eines Anschlags für die Befülldüse 105. Der Anschlagsabschnitt 137 ist auf der Innenseite des zweiten Formteils 119 gebildet, so dass die Befülldüse 105 beim Einführen in den Einfüllstutzen 104 mit ihrem vorderen Ende an den Anschlagsabschnitt 137 stößt. Der Anschlagsabschnitt 137 ist beispielsweise durch einen im Inneren des zweiten Formteils 119 hervorstehenden Wandabschnitt gebildet, der sich entlang der Befüllrichtung erstreckt. Auf diese Weise kann eine Verwirbelung der Flüssigkeit auch bei hohen Füllgeschwindigkeiten verhindert werden. Das erste Formteil 117 umfasst eine umlaufende Wandung 147, die einen zylindrischen Aufnahmeraum zur Aufnahme des zweiten Formteils 119 umfasst.

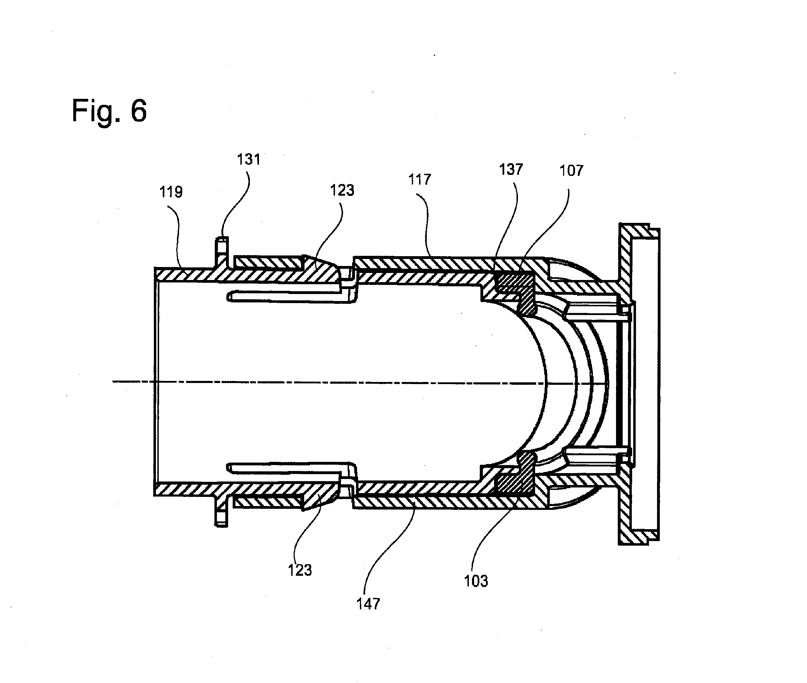

Fig. 6 zeigt eine Querschnittsansicht des Tauchrohrformkörpers 103 mit zusammengesetzten Formkörperteilen 117 und 119 und dem Dichtungselement 107. Das erste Formteil 117 ist derart ausgestaltet, dass eine Wandung 147 das zweite Formteil 119 seitlich umgreift. Das zweite Formteil 119 ist in dem ersten Formteil 117 aufgenommen.

Dadurch erhöht sich die Dichtwirkung zwischen den beiden Formteilen 117 und 119 zusätzlich. Die Rasthaken 123 sind in den Rastöffnungen 127 eingehakt.

Das zweite Formteil 119 weist in der Auflagefläche eine umlaufende Aussparung 137 zum formschlüssigen Einsetzen eines vorspringenden Abschnittes des Dichtungselementes 107 in dem Tauchrohrformkörper 103 auf. Dadurch wird nicht nur die Dichtwirkung des Dichtungselementes 107 erhöht, sondern es kann auch eine korrekte Lage des Dichtungselementes 107 beim Zusammensetzen des Tauchrohrformkörpers 103 sichergestellt werden. Daneben wird eine Halterung des Dichtelementes 107 zwischen dem ersten Formteil 117 und dem zweiten Formteil 119 verbessert.

Zusätzlich kann in dem zweiten Formteil 119 eine Positionierungsfeder vorgesehen sein, die in eine Positionierungsnut in dem Dichtungselement eingreift, anhand der der korrekte Sitz des Dichtungselementes 107 beim Zusammensetzen des Formkörpers sichergestellt wird.

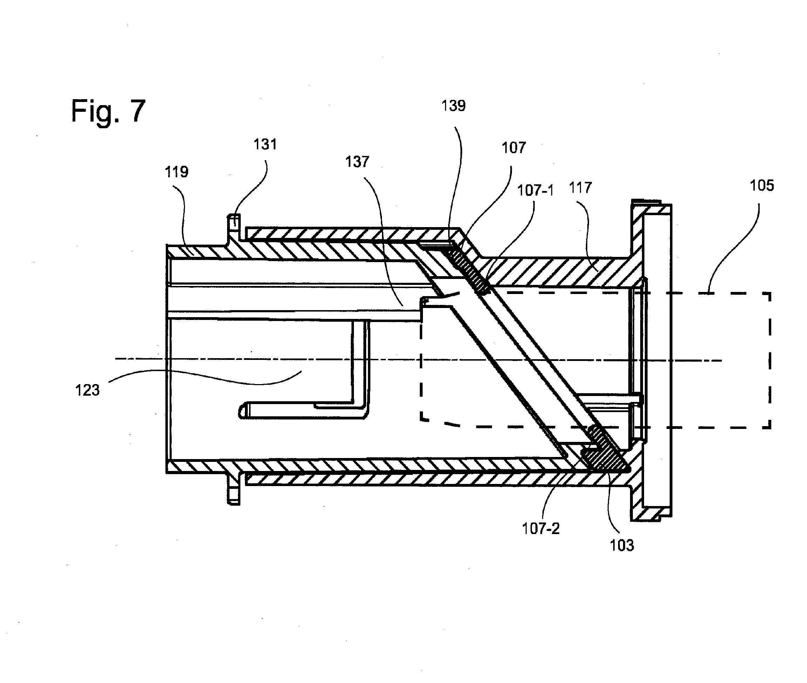

Fig. 7 zeigt eine weitere Querschnittsansicht des Tauchrohrformkörpers 103 mit zusammengesetzten Formkörperteilen 117 und 119, in der eine gestrichelte Linie die Position der eingesetzten Befülldüse 105 angibt. Die Stellen 107-1 und 107-2 sind die Stellen in der Querschnittsebene, an denen die Befülldüse 105 an dem Dichtungselement 107 anliegt. Durch die um die Befülldüse 105 diagonal umlaufende Dichtlinie wird ein Zurückspritzen der Flüssigkeit verhindert.

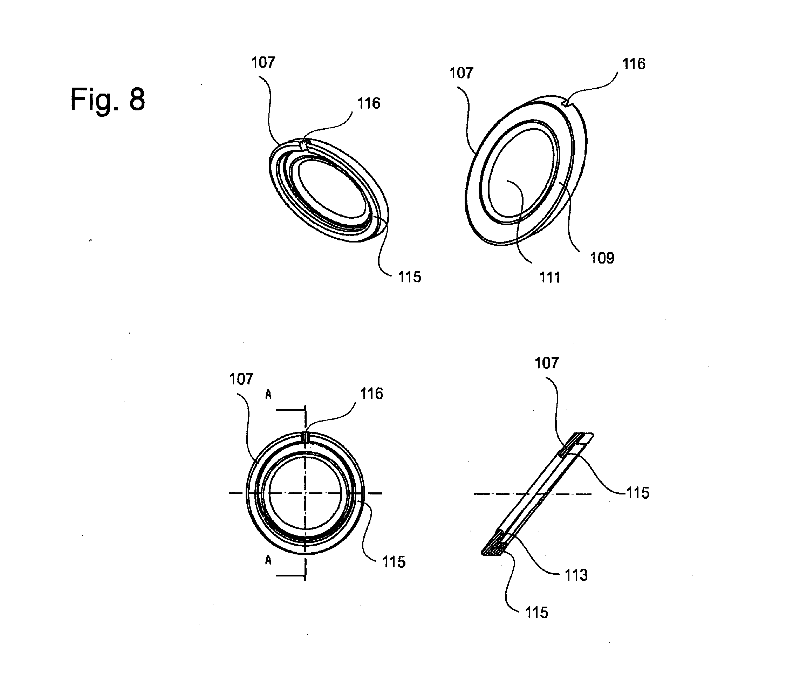

Fig. 8 zeigt mehrere Ansichten eines Dichtungselementes 107. Das Dichtungselement 107 befindet sich in dem Einfüllstutzen 104, der durch den Tauchrohrformkörper 103 und das erste Befüllkopfteil 100-1 gebildet wird. In der Längsrichtung des Einfüllstutzens 104 läuft das Dichtungselement 107 diagonal herum, um den Einfüllstutzen 104 gegenüber der Befülldüse 105 abzudichten. Das Dichtungselement 107 kann ein Material umfassen, das eine Kristallbildung von Harnstoffkristallen an deren Oberfläche verhindert.

Das Dichtungselement 107 wird durch eine elastische Ringscheibe 109 mit einer ovalen Einführöffnung 111 zum Einführen der Befülldüse 105 gebildet. Die ovale Einführöffnung 111 legt sich bei einer diagonalen Anordnung des Dichtungselementes 107 an die im Querschnitt kreisförmige Außenseite der Befülldüse 105.

Die diagonale Lage des Dichtungselementes 107 stellt sicher, dass die unterschiedlich angeordneten Öffnungen in Zapfpistolen für die Zapfventilautomatik nicht verdeckt werden und eine Abschaltung der jeweiligen Zapfpistole möglich bleibt.

Die Ringscheibe 109 umfasst einen Verstärkungsabschnitt 113 zum Verstärken des Dichtungselementes 107 im Bereich der Einführöffnung 111. Der Verstärkungsabschnitt 113 kann beispielsweise durch einen Bereich mit einer größeren Dicke als die übrige Dicke der Ringscheibe 109 gebildet sein, beispielsweise durch eine umlaufende ringförmige Wulst 115. Der innere Dichtungsrand des Dichtungselementes 107 wird dadurch nicht nur verstärkt, sondern zusätzlich auch abgerundet, so dass ein Einsetzen der Befülldüse 105 erleichtert wird.

Zum Aufnehmen des Dichtungselementes weist der Tauchrohrformkörper 103 eine Aussparung zum Einsetzen des Dichtungselementes 107 auf. Insbesondere ist die Aussparung zum Einsetzen des Dichtungselementes 107 zwischen einem ersten Formteil 117 und einem zweiten Formteil zwischen zwei Auflageflächen 135 und 139 gebildet. Sowohl das erste Formteil 117 als auch das zweite Formteil 119 können die Aussparung zum Einsetzen des Dichtungselementes 107 umfassen.

Das Dichtungselement 107 weist einen umlaufenden vorstehenden Rand 115 auf, der in eine entsprechende ringförmige Aussparung in dem Einfüllstutzen 104 eingesetzt wird und das Dichtungselement 107 in dem Einfüllstutzen 104 zusätzlich fixiert. Daneben umfasst das Dichtungselement 107 eine Positionierungsnut 116 zum Eingreifen in eine entsprechende Positionierungsfeder, anhand der der korrekte Sitz des Dichtungselementes 107 sichergestellt werden kann. Das Dichtungselement 107 kann aus allen geeigneten Dichtmaterialien gebildet sein, beispielsweise aus Polyurethan, Silikon, silanmodifizierten Polymeren, thermoplastischen Elastomere (TPE) oder Gummi.

Durch den erfindungsgemäßen Befüllkopf 100 können unterschiedliche Zapfpistolen sowie GL-Adapter für Kanister und Kruse-Flaschen aufgenommen werden. Eine Schaltung einer Zapfventilautomatik, beispielsweise einer ZVA-Pistole, erfolgt über den Ringmagnet 129 des Befüllkopfes 100. Daneben erfolgt eine Belüftung bei einer Betankung mit einer Kruse-Flasche und einem Kanister über einen Anschlussstutzen 124 für eine Belüftungsleitung.

Weiter ist durch das Flüssigkeitsreservoir 141 der Befüllkopf 100 derart ausgebildet, dass Rückschwappmenge (Spit-Back-Menge) aufgenommen werden kann. Der Befüllkopf 100 ermöglicht einen Druckabbau und vereinheitlicht den Flüssigkeitsstrahl unterschiedlicher Zapfpistolen beim Befülllen. Ein Zurückschwappen von Flüssigkeit (Spit-Back) wird wirksam verhindert. Bei Verwendung des Befüllkopfes 100 zum Befüllen mit einer wässrigen Harnstofflösung kann eine Kristallbildung im Inneren des Befüllkopfes 100 durch einen dichten Verschlussdeckel verhindert werden, der aufgeschraubt wird und in den Fig. nicht gezeigt wird.

Insbesondere ermöglicht der Befüllkopf 100 Füllgeschwindigkeiten von 401/min mit einem kleinen kompakten Befüllkopf, ohne dass ein Zurückschwappen von Flüssigkeit auftritt. Durch die Anordnung, Lage und Form des Dichtungselementes ist ein dreimaliges Nachtanken ohne Austritt von Flüssigkeit möglich.

Der Tankvorgang mit dem Befüllkopf 100 wird durch ein manuelles Betätigen der Zapfpistole eingeleitet. Über den Befüllkopf 100 gelangt die Flüssigkeit nach dem Öffnen eines Klappenventils in den Flüssigkeitstank und der Flüssigkeitstank wird mit einer wässrigen Harnstofflösung gefüllt. In dem Flüssigkeitstank verdrängt die Flüssigkeit Luft, die über ein Entlüftungsventil einweicht. Anschließend steigt der Flüssigkeitspegel steigt bis an den Tauchrohrformkörper 103 und der Tankinnendruck und der Flüssigkeitsstand steigen. Ein Schwimmerventil schließt und die Flüssigkeit gelangt bis an die Befülldüse der Zapfpistole, deren Zapfventilautomatik daraufhin abschaltet. Ein Klappenventil schließt und der Tankvorgang ist beendet.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befüllkopf
- 100-1: Befüllkopfteil
- 100-2: Befüllkopfteil
- 103: Tauchrohrformkörper
- 104: Einfüllstutzen
- 105: Befülldüse
- 107: Dichtelement
- 109: Ringscheibe
- 111: Einführöffnung
- 113: Verstärkungsabschnitt
- 115: Wulst
- 116: Positionierungsnut
- 117: erstes Formteil
- 119: zweites Formteil
- 123: Rasthaken
- 127: Rastöffnung
- 131: Schwallwand
- 133: Öffnung
- 135: Auflagefläche
- 137: Anschlagsabschnitt
- 139: Auflagefläche
- 141: Flüssigkeitsreservoir
- 143: Gehäusewand
- 145: Durchtrittsöffnung
- 147: Wandung

## Patentansprüche

1. Befüllkopf (100) für einen Flüssigkeitstank in einem Kraftfahrzeug mit einem zusammengesetzten Tauchrohrformkörper (103) im Inneren des Befüllkopfes (100), mit:
einem ersten Formkörperteil (117) zum Bilden eines Einfüllstutzens für eine Befülldüse (105); und
einem zweiten Formkörperteil (119) zum Formen eines Flüssigkeitsstrahls der Befülldüse (105), das an dem ersten Formkörperteil (117) befestigt ist, wobei das erste Formkörperteil (117) und das zweite Formkörperteil (119) mit einer Gehäusewand (143) des Befüllkopfes (100) ein Flüssigkeitsreservoir (141) zum Aufnehmen einer Flüssigkeitsmenge bilden
**dadurch gekennzeichnet, dass**
das erste Formkörperteil (117) eine Öffnung (133) zum Auslassen von Luft aus dem Flüssigkeitsreservoir (141) umfasst und die Öffnung (133) in der Nähe einer Verbindung des ersten Formkörperteils (117) mit dem Befüllkopf (100) gebildet ist.

2. Befüllkopf (100) nach Anspruch 1, wobei das zweite Formkörperteil (119) eine kreisförmig umlaufende Schwallwand (131) zum Vermindern einer Flüssigkeitsströmung in das Flüssigkeitsreservoir (141) umfasst.

3. Befüllkopf (100) nach Anspruch 2, wobei die umlaufende Schwallwand (131) eine Durchtrittsöffnung (145) für die Flüssigkeitsströmung in das Flüssigkeitsreservoir (141) umfasst.

4. Befüllkopf (100) nach einem der vorangehenden Ansprüche, wobei der Tauchrohrformkörper (103) eine zylindrische Grundform aufweist.

5. Befüllkopf (100) nach einem der vorangehenden Ansprüche, wobei zwischen dem ersten Formkörperteil (117) und dem zweiten Formkörperteil (119) ein Dichtungselement (107) zum Abdichten des Einfüllstutzens eingesetzt ist.

6. Befüllkopf (100) nach Anspruch 5, wobei das Dichtungselement (107) diagonal um eine Längsachse des Einfüllstutzens (104) umläuft.

7. Befüllkopf (100) nach Anspruch 5 oder 6, wobei das erste Formkörperteil (117) oder das zweite Formkörperteil (119) eine Auflagefläche (135, 139) für das Dichtungselement (107) umfasst.

8. Befüllkopf (100) nach einem der vorangehenden Ansprüche, wobei das erste Formkörperteil (117) ein Rastmittel (127) zum Einrasten in dem zweiten Formkörperteil (119) oder das zweite Formkörperteil (119) ein Rastmittel (123) zum Einrasten in dem ersten Formkörperteil (117) umfasst.

9. Befüllkopf (100) nach einem der vorangehenden Ansprüche, wobei das zweite Formkörperteil (119) einen Anschlagsabschnitt (137) zum Bilden eines Anschlags für die Befülldüse (105) umfasst.

10. Befüllkopf (100) nach einem der vorangehenden Ansprüche, wobei der Tauchrohrformkörper (103) mit dem Befüllkopf (100) verschweißt oder verklebt ist.

11. Befüllkopf (100) nach einem der vorangehenden Ansprüche, wobei das erste Formkörperteil (117) eine umlaufende Wandung (147) zum seitlichen Umschließen des zweiten Formkörperteils (119) umfasst.

12. Befüllkopf (100) nach einem der vorangehenden Ansprüche, wobei das erste Formkörperteil (117) oder das zweite Formkörperteil (119) ein Kunststoffspritzgussteil ist.

## Claims

1. Filling head (100) for a liquid tank in a motor vehicle, with an assembled submersible-tube moulded body (103) in the interior of the filling head (100), with:
a first moulded body part (117) for forming a filler neck for a filling nozzle (105); and
a second moulded body part (119) for forming a liquid jet of the filling nozzle (105), said second moulded body part being fastened to the first moulded body part (117), wherein the first moulded body part (117) and the second moulded body part (119) together with a housing wall (143) of the filling head (100) form a liquid reservoir (141) for receiving a quantity of liquid,
**characterized in that**
the first moulded body part (117) comprises an opening (133) for letting air out of the liquid reservoir (141), and the opening (133) is formed in the vicinity of a connection of the first moulded body part (117) to the filling head (100).

2. Filling head (100) according to Claim 1, wherein the second moulded body part (119) comprises a circularly encircling splash wall (131) for reducing a liquid flow into the liquid reservoir (141).

3. Filling head (100) according to Claim 2, wherein the encircling splash wall (131) comprises a passage opening (145) for the liquid flow into the liquid reservoir (141).

4. Filling head (100) according to one of the preceding claims, wherein the submersible-tube moulded body (103) has a cylindrical basic shape.

5. Filling head (100) according to one of the preceding claims, wherein a sealing element (107) for sealing the filler neck is inserted between the first moulded body part (117) and the second moulded body part (119).

6. Filling head (100) according to Claim 5, wherein the sealing element (107) runs diagonally around a longitudinal axis of the filler neck (104).

7. Filling head (100) according to Claim 5 or 6, wherein the first moulded body part (117) or the second moulded body part (119) comprises a supporting surface (135, 139) for the sealing element (107).

8. Filling head (100) according to one of the preceding claims, wherein the first moulded body part (117) comprises a latching means (127) for latching in the second moulded body part (119) or the second moulded body part (119) comprises a latching means (123) for latching in the first moulded body part (117).

9. Filling head (100) according to one of the preceding claims, wherein the second moulded body part (119) comprises a stop section (137) for forming a stop for the filling nozzle (105).

10. Filling head (100) according to one of the preceding claims, wherein the submersible-tube moulded body (103) is welded or adhesively bonded to the filling head (100).

11. Filling head (100) according to one of the preceding claims, wherein the first moulded body part (117) comprises an encircling wall (147) for laterally surrounding the second moulded body part (119).

12. Filling head (100) according to one of the preceding claims, wherein the first moulded body part (117) or the second moulded body part (119) is an injection-moulded plastics part.

## Revendications

1. Tête de remplissage (100) pour un réservoir de liquide dans un véhicule automobile comprenant un corps moulé de tube plongeur composé (103) à l'intérieur de la tête de remplissage (100), comprenant :
une première partie de corps moulé (117) pour former une tubulure de remplissage pour une buse de remplissage (105) ; et
une deuxième partie de corps moulé (119) pour former un jet de liquide de la buse de remplissage (105), laquelle deuxième partie de corps moulé est fixée sur la première partie de corps moulé (117),
la première partie de corps moulé (117) et la deuxième partie de corps moulé (119) formant avec une paroi de boîtier (143) de la tête de remplissage (100) un réservoir de liquide (141) pour recevoir une quantité de liquide,
**caractérisée en ce que**
la première partie de corps moulé (117) comporte une ouverture (133) pour la sortie d'air hors du réservoir de liquide (141) et l'ouverture (133) est formée à proximité d'une liaison de la première partie de corps moulé (117) à la tête de remplissage (100).

2. Tête de remplissage (100) selon la revendication 1, dans laquelle la deuxième partie de corps moulé (119) comporte une paroi brise-flots périphérique circulaire (131) pour diminuer un écoulement de liquide dans le réservoir de liquide (141).

3. Tête de remplissage (100) selon la revendication 2, dans laquelle la paroi brise-flots périphérique (131) comporte une ouverture de passage (145) pour l'écoulement de liquide dans le réservoir de liquide (141).

4. Tête de remplissage (100) selon l'une quelconque des revendications précédentes, dans laquelle le corps moulé de tube plongeur (103) présente une forme de base cylindrique.

5. Tête de remplissage (100) selon l'une quelconque des revendications précédentes, dans laquelle un élément d'étanchéité (107) pour étanchéifier la tubulure de remplissage est inséré entre la première partie de corps moulé (117) et la deuxième partie de corps moulé (119).

6. Tête de remplissage (100) selon la revendication 5, dans laquelle l'élément d'étanchéité (107) s'étend diagonalement autour d'un axe longitudinal de la tubulure de remplissage (104).

7. Tête de remplissage (100) selon la revendication 5 ou 6, dans laquelle la première partie de corps moulé (117) ou la deuxième partie de corps moulé (119) comporte une surface d'appui (135, 139) pour l'élément d'étanchéité (107).

8. Tête de remplissage (100) selon l'une quelconque des revendications précédentes, dans laquelle la première partie de corps moulé (117) comporte un moyen d'encliquetage (127) pour l'encliquetage dans la deuxième partie de corps moulé (119) ou la deuxième partie de corps moulé (119) comporte un moyen d'encliquetage (123) pour l'encliquetage dans la première partie de corps moulé (117).

9. Tête de remplissage (100) selon l'une quelconque des revendications précédentes, dans laquelle la deuxième partie de corps moulé (119) comporte une portion de butée (137) pour former une butée pour la buse de remplissage (105).

10. Tête de remplissage (100) selon l'une quelconque des revendications précédentes, dans laquelle le corps moulé de tube plongeur (103) est soudé ou collé sur la tête de remplissage (100).

11. Tête de remplissage (100) selon l'une quelconque des revendications précédentes, dans laquelle la première partie de corps moulé (117) comporte une paroi périphérique (147) pour entourer latéralement la deuxième partie de corps moulé (119).

12. Tête de remplissage (100) selon l'une quelconque des revendications précédentes, dans laquelle la première partie de corps moulé (117) ou la deuxième partie de corps moulé (119) est une partie moulée par injection de plastique.
